(19) Europäisches Patentamt
European Patent Office
Office européen des brevets

(11) **EP 1 620 331 B1**

(12) **EUROPEAN PATENT SPECIFICATION**

(45) Date of publication and mention of the grant of the patent:
**24.02.2016 Bulletin 2016/08**

(51) Int Cl.:
***B65F 5/00*** *(2006.01)*     ***B65G 53/04*** *(2006.01)*
***G06F 17/17*** *(2006.01)*

(21) Application number: **03723559.5**

(22) Date of filing: **24.04.2003**

(86) International application number:
**PCT/SE2003/000661**

(87) International publication number:
**WO 2004/094270 (04.11.2004 Gazette 2004/45)**

(54) **AUTOMATED NEXT-HOP ALGORITHM FOR A MULTI-BRANCH REFUSE COLLECTION SYSTEM**

AUTOMATISIERTER NEXT-HOP-ALGORITHMUS FÜR EIN VERZWEIGTES MÜLLSAMMELSYSTEM

ALGORITHME D'AUTOMATISATION DU SAUT SUIVANT POUR SYSTEME DE RECUEIL D'ORDURES MENAGERES A BRANCHES MULTIPLES

(84) Designated Contracting States:
**AT BE BG CH CY CZ DE DK EE ES FI FR GB GR HU IE IT LI LU MC NL PT RO SE SI SK TR**

(43) Date of publication of application:
**01.02.2006 Bulletin 2006/05**

(73) Proprietor: **Envac AB**
**117 84 Stockholm (SE)**

(72) Inventors:
• **RYLENIUS, Jan**
**S-191 33 Sollentuna (SE)**

• **BRANDEFELT, Niklas**
**SE-146 52 Tullinge (SE)**

(74) Representative: **Hedman, Anders et al**
**Aros Patent AB**
**P.O. Box 1544**
**751 45 Uppsala (SE)**

(56) References cited:
**WO-A1-01/05683     WO-A1-01/05684**

Description

TECHNICAL FIELD OF THE INVENTION

The present invention generally relates to refuse management and waste disposal, and more particularly to a method of operating a vacuum refuse collection system, a vacuum refuse collection system as such, a control system for controlling emptying of refuse in such a system as well as a computer program product for controlling operation of a refuse collection system.

BACKGROUND OF THE INVENTION

Refuse collection systems operating at subatmospheric or vacuum pressure for transport of refuse by means of suction of air have been in use for many years and are well known to present an efficient, clean and convenient solution to the waste disposal problem. Such systems for suction transport of refuse, hereinafter simply referred to as vacuum refuse collection systems, have worked remarkably well in smaller and medium-sized residential and office building areas. However, as vacuum refuse collection systems have been placed into service in larger and more dense residential and office building areas and/or areas with multi-story buildings of the high-rise type, the demands on the systems have increased considerably.

In particular, when refuse chutes are located in high-rise buildings, the amounts of refuse inserted into the chutes in a short period of time may be very large, and the amounts of refuse gathering in the refuse chutes may then become too high between the emptyings of the refuse chutes.

A common approach to reduce the problems associated with a high inflow of refuse into the refuse chutes is to increase the temporary storage capacity of at least specific, frequently used refuse chutes. For example, our international application WO 98/47788 discloses a refuse limitation valve provided above the discharge valve in the refuse chute to enable storage of refuse within the refuse chute above the limitation valve. This arrangement has turned out to be very efficient in many applications. However, since the refuse chute itself is used as a storage volume for refuse there is a risk, especially in high-rise buildings, that the chute above the limitation valve is filled with refuse up to the first access port before the next emptying.

Different attempts have also been made to provide so-called expanded storage volumes in at least some of the refuse chutes, for example as described in our Swedish patent application 9900401-2. The expanded storage volume, normally in the form of a container with substantially larger cross-section than the refuse chute, is provided at a position above the discharge valve, and allows temporary storage of relatively high amounts of refuse.

Another common approach involves emptying the refuse chutes and collecting the refuse therefrom more frequently, thus shortening the emptying cycle. However, the operation control of refuse collection systems of today is far from optimized in this respect.

Attempts have been made to reduce the emptying and collection times by increasing the vacuum in the transport pipes of the system, but unfortunately such an increase of the vacuum will increase the danger of compacting the refuse too much, resulting in a plug flow that may cause blockage in the pipes of the system. Such blockage may even shut down an entire branch line or transport line. Another problem related to the employment of increased vacuum levels is the noise that is generated by the resulting airflow through the refuse chute in connection with the emptying. In addition, high levels of vacuum may force opened access ports to close rapidly and jam or even injure a person that is about to discharge a bag of refuse.

More recently, so-called level-controlled emptying has been introduced in order to optimize the performance of vacuum refuse collection systems. In level-controlled vacuum refuse collection systems, each refuse chute is provided with a discrete level sensor for indicating the existence of refuse being piled up to a predetermined level in the refuse chute. When the refuse reaches the predetermined level, the level sensor sends a level-indication signal to the control system. At level-controlled emptying, the control system gives higher priority to refuse chutes with level indications, and empties such refuse chutes on a "first-come first-serve" basis. In this way, the control system may change the predefined structured emptying order normally used by the system and direct the collection of refuse to refuse chutes with level indications.

Conventional level-controlled emptying has turned out to be effective at certain load conditions in smaller systems, leading to improved system performance. In larger and more complex systems however, level-controlled emptying tends to have an opposite effect, leading to frequent jumps between different branches of the system and thus inefficient use of the available refuse collection resources.

Conventional level-controlled emptying is also inflexible in that once the level sensors have been arranged in the refuse chutes, it is difficult to flexibly adapt the predefined levels so as to change the time margins of the vacuum refuse collection system and optimize the operation of the system. The predefined level used in conventional level-controlled emptying may be too high to prevent overloading of refuse chutes at high load in the system, whereas at low load in the system, the predefined level may be too low for optimal utilization of the resources. Another disadvantage is that the "first-come first-serve" principle does not consider the consequences of the order in which the refuse chutes are emptied. For example, there is always the risk of overloading of a refuse chute in a critical area, which is not first in the emptying queue.

One way of improving the utilization of the available resources in a vacuum refuse collection system and avoiding many of the disadvantages of conventional level-controlled emptying is disclosed in our international application WO 01/05683. The idea here is to partition discharge valves, and hence corresponding refuse chutes, into groups and perform controlled emptying of refuse by opening discharge valves and initiating collection of discharged refuse on a group basis. More particularly, the control system selects one group at a time for opening of discharge valves within the selected group. This approach has turned out to be particularly efficient for larger systems, especially in combination with level-controlled emptying. By performing level-controlled emptying on group level instead of performing level-controlled emptying for individual discharge valves many of the disadvantages of conventional level control are avoided, while the advantages thereof are still obtained.

A further improvement in recent years involves the use of adaptive prediction techniques for improved control of a vacuum refuse collection system, as disclosed in our international application WO 01/0568 which corresponds to the preambles of claims 1, 10 and 21. The idea here is to adaptively predict future values of one or more operational parameters based on a number of consecutive refuse level measurements in the system, and control the operation of the system accordingly. By using adaptive prediction techniques instead of simple and static rules of thumb, the reliability and efficiency of the overall refuse collection system can be substantially improved.

Prediction-based control has turned out to be particularly useful for larger and more complex systems, especially when discharge valves are partitioned into groups and emptied on a group basis. In group operation, the groups are normally selected for emptying one at a time, and the selection procedure is typically based on predicted values of operational parameters in the refuse collection system. Preferably, the group selection procedure makes use of so-called emptying conditions, and it is determined, for each group, whether the emptying condition for the group is valid or not based on an appropriate subset of the predicted values. Groups with valid emptying conditions are then selectable for emptying of refuse. Each group is preferably associated with a priority value, and the group with the highest priority value among the groups with valid emptying conditions is selected for emptying of refuse. There are different ways of setting the priority values, for example by considering the predicted values and the consequences of overloading refuse chutes.

Although the above approach for prediction-based control indeed has the possibility to offer improved reliability and efficiency, it has been recognized that there is still a potential for further improvements within the general framework of prediction-based control.

## SUMMARY OF THE INVENTION

It is a general object of the present invention to provide an efficient and reliable vacuum refuse collection system as well as an improved method of operating such a system.

It is another object of the invention to provide an improved control system for controlling emptying of refuse from refuse chutes in a vacuum refuse collection system.

Yet another object of the invention is to provide a computer program for controlling operation of a refuse collection system, when said computer program is running on a computer operatively connected to the system.

It is a particular object to minimize the number of overloaded refuse chutes in the entire refuse collection system.

These and other objects are met by the invention as defined by the accompanying patent claims.

The invention generally relates to a vacuum refuse collection system having a multi-branch transport pipe system with a number of refuse chutes connected thereto. It has been recognized that optimal or close to optimal performance can be obtained by performing controlled emptying of refuse branch by branch, and analyzing the future consequences of a given control action/decision on a wider system basis rather than being limited to analyzing the impact on individual branches.

A basic idea is to perform automated selection of a hop, also commonly referred to as a jump, to a next branch according to the following elegant and efficient next-hop selection procedure. For each of a number of possible next-hop candidates, representations of future refuse chute load levels in a plurality of branches within the system are predicted, and a system consequence value is determined based on these predicted load level representations. The predictions span at least one hop ahead in time. Once the system consequence values for the next-hop candidates have been determined, a hop or jump to a next branch is selected among those candidates that have the most favorable system consequence values.

Preferably, the system consequence value for a given next-hop candidate is determined by considering the load levels in a majority of the branches in the entire refuse collection system. In this way, the control system can make vital control decisions based on system-wide information, while still performing controlled emptying of refuse branch by branch. The proposed next-hop selection procedure generally results in a minimized number of overloaded refuse chutes, which will reduce both operational disturbances as well as disturbances for people using or otherwise coming into contact with the refuse chutes.

Naturally, it is often desirable to select the next-hop candidate that has the most favorable system consequence value. However, there may be a whole group of next-hop candidates that all have favorable system consequence values compared to other worse next-hop candidates, and excellent performance can be maintained simply by selecting a candidate from this high performance group. It may also be the case, that two or more next-hop candidates have essentially the same consequence value. Depending on how the system consequence value is defined, the most favorable value may be a low value or alternatively a high value.

The predicted representations of future refuse chute load levels may be weighted by means of respective priority coefficients in order to take the relative importance of emptying (or rather avoiding overloading) different refuse chutes into account.

The proposed next-hop selection procedure may be integrated with and implemented as a back-up procedure in relation to a default, structured emptying scheme with a predetermined branch selection order. This typically means that the predetermined branch selection order may be interrupted if the system consequence value for a hop to the branch in turn according to the structured emptying scheme is less favorable than the system consequence value for another next-hop candidate, enabling selection of a better branch form a system point of view.

Another aspect of the invention concerns a branch-oriented approach, in which a branch consequence value is determined for each next-hop candidate and the *next-hop algorithm* selects hop to a next branch among those candidates that have, the highest branch consequence values. This approach has turned out to be quite competitive for smaller systems.

The invention offers the following advantages:

- Near-optimal performance;
- High reliability;
- System-wide consequence analysis; and
- Minimized number of overloaded refuse chutes.

Other advantages offered by the present invention will be appreciated upon reading of the below description of the embodiments of the invention.

## BRIEF DESCRIPTION OF THE DRAWINGS

The invention, together with further objects and advantages thereof, will be best understood by reference to the following description taken together with the accompanying drawings, in which:

Fig. 1 is a schematic drawing illustrating an example of a vacuum refuse collection system;

Fig. 2 is a schematic flow diagram of a next-hop selection procedure according to a preferred embodiment of the invention;

Fig. 3 is a schematic diagram of relevant parts of an exemplary multi-branch refuse collection system, illustrating three branches being considered;

Fig. 4 is a schematic drawing of a computer-implemented control system according to a preferred embodiment of the invention;

Fig. 5 is a schematic diagram of a simplified exemplary multi-branch refuse collection system, serving as a basis for a first numerical example; and

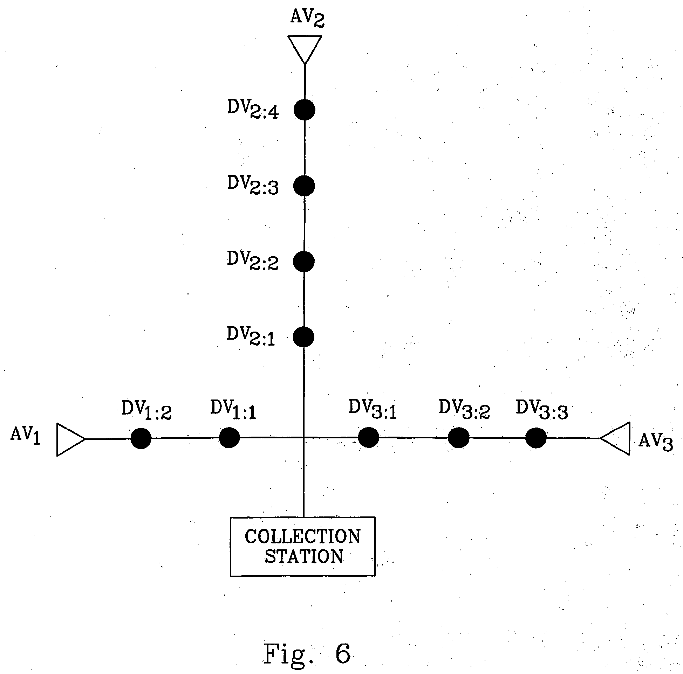

Fig. 6 is a schematic diagram of another simplified exemplary multi-branch refuse collection system, serving as a basis for a second numerical example.

## DETAILED DESCRIPTION OF EMBODIMENTS OF THE INVENTION

Throughout the drawings, the same reference characters will be used for corresponding or similar elements.

In order to avoid misconceptions, it should be understood that the term 'refuse' not only includes what traditionally is denoted as 'household refuse' or 'household garbage' but also includes all fractions within the field of waste disposal such as, but not limited to paper, clothes, laundry, packages and organic waste.

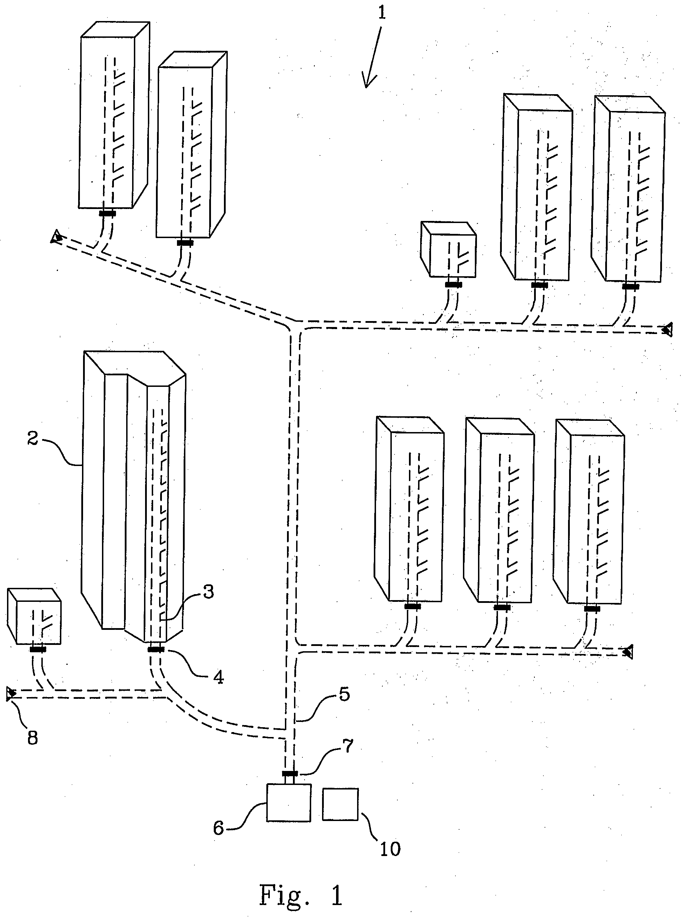

For a better understanding of the invention, a general overview of an illustrative vacuum refuse collection system will now be made with reference to Fig. 1.

*System overview*

Fig. 1 is a schematic drawing illustrating an example of a vacuum refuse collection system. As an example, assume that the vacuum refuse collection system 1 is installed in a residential and/or business area having a number of buildings. Each building 2 is installed with a refuse chute 3, or equivalent. In this particular example, the refuse chutes are vertical chutes extending vertically through the buildings, and each chute normally has several insertion openings with corresponding access ports (not shown). Each refuse chute is equipped with an openable and closable discharge valve 4, preferably positioned in the basement of the building. When opened the discharge valve 4 establishes communication between the refuse chute 3 and an underground transport pipe 5 for discharging the refuse gathered upon the valve into the transport pipe. When closed the discharge valve 4 blocks the lower end of the refuse chute to provide a seal between the chute and the transport pipe 5.

The vacuum refuse collection system normally includes a number of transport pipes 5 which form an underground transport pipe system in which refuse is transported to a central refuse collection station 6 by means of suction of air. The transport pipe system is illustrated as having a main pipe to which a plurality of branches are connected. It should though be understood that the invention is not limited to the particular example of Fig. 1, and that other configurations of the transport pipe system are feasible as well.

Each branch in the system has an air inlet valve 8 at the end of the branch. When the main valve 7 at the central refuse collection station 6 is opened, the transport pipe system or appropriate parts thereof is exposed to subatmospheric pressure or vacuum pressure, and when the air inlet valve 8 of a particular branch is opened the air needed for transporting the refuse gathered in the branch transport pipe 5 enters the system and transports the refuse to the central station 6. Sectioning valves (not shown) may be used to seal different sections of the transport pipe system from each other to ensure sufficient pressure in individual sections for effective suction transport.

Furthermore, the vacuum refuse collection system comprises a control system 10 for controlled emptying of refuse in the system. More particularly, the control system controls the emptying of refuse from the refuse chutes to the transport pipe system and the suction transport of refuse from different branches of the transport pipe system to the central collection station by controlling the discharge valves, air inlet valves, sectioning valves and main valve of the system according to accepted control technology.

The invention is not concerned with the specific design of the discharge valves, air inlet valves, sectioning valves and main valves, which are all well known in the art and may be of any conventional type used in vacuum refuse collection systems. In the same manner, the central refuse collection station may be any conventional station known to the art. Typically, however, once the refuse has been transported to the central station, the refuse is compacted at the central station and stored in containers.

***Basic exemplary solution***

The idea is to perform frequent measurements of the increasing level of refuse in a number of refuse chutes in the various branches of the refuse collection system or otherwise intermittently estimating a suitable representation of the refuse chute load level, for example by using level sensors as described in our international application WO 01/05684 or by using any other suitable means. The signal information generated by the level sensors is transferred directly or via a distributed control unit to the control system, and the control system normally responds to signal information from the level sensors arranged throughout the refuse collection system for performing controlled emptying of refuse.

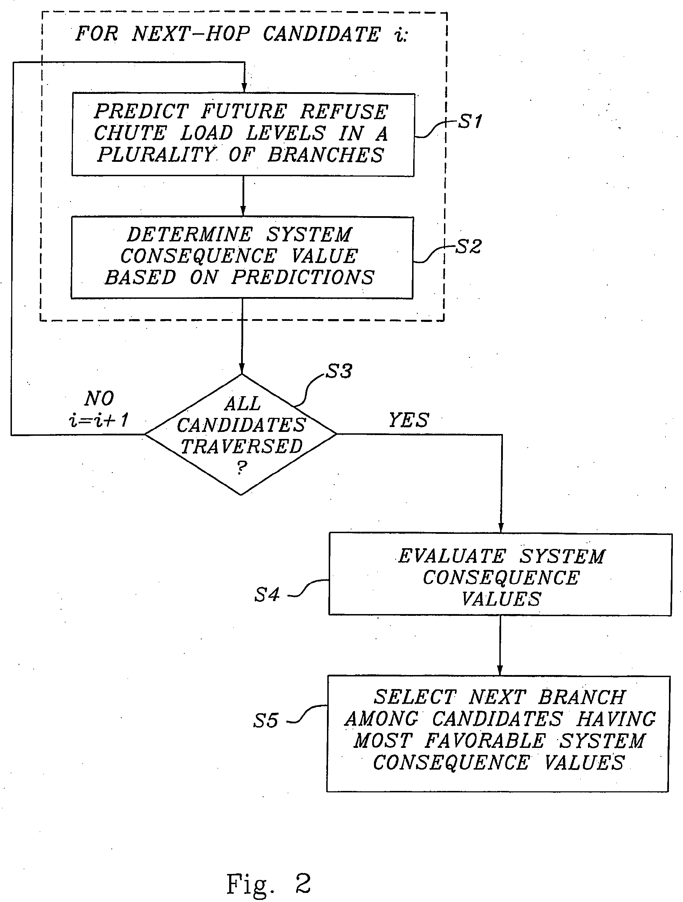

It has been recognized that optimal or close to optimal performance can be obtained by performing controlled emptying of refuse branch by branch, and analyzing the future consequences of a given control acnoza/decision on a wider system basis rather than being limited to analyzing the impact on individual branches. The invention is generally based on automated selection of a hop or jump to a next branch according to an efficient next-hop selection procedure, referring to the schematic flow diagram of Fig. 2.

For each of a number of possible next-hop candidates, representations of future refuse chute load levels in a plurality of branches within the system are predicted (SI), and a system consequence value is determined based on these predicted load level representations (S2). The predictions span at least one hop ahead in time. Once the system consequence values for all the next-hop candidates have been determined (Y in S3), the system consequence values are evaluated (S4) and a hop to the next branch is selected among those candidates that have the most favorable system consequence values (S5).

The future refuse chute load level can be predicted by using any known prediction technique, including gradient-based techniques as discussed in the above-mentioned international application WO 01/05684.

It has turned out to be very beneficial to consider the predicted refuse chute load levels in a majority of the branches in the entire refuse collection system when determining the system consequence value for a given next-hop candidate. In this way, the control system can make vital control decisions based on system-wide or near system-wide information, while still performing controlled emptying of refuse branch by branch.

The next-hop candidate that has the most favorable system consequence value is normally selected. However, there may be a whole group of next-hop candidates that all have favorable system consequence values compared to other next-hop candidates, and excellent performance can be maintained simply by selecting one of these high performance candidates. It may also be the case, that two or more next-hop candidates have essentially the same consequence value.

The predicted representations of future refuse chute load levels may be weighted by means of respective priority coefficients in order to take the relative importance of emptying (or rather avoiding overloading) different refuse chutes into account, as will be exemplified below.

***Exemplary embodiment of next-hop algorithm***

An illustrative *next-hop algorithm,* also referred to as a *next-jump algorithm,* according to a first exemplary embodiment of the invention is summarized in mathematical formula below:

For each next-hop candidate *j*, a system consequence value $B_{system}$ is determined according to the following algorithm:

$$B_l = \sum_k (R_{lk} + J)^P \cdot K_{lk} \qquad for \ l \in S$$

$$B_{system} = \sum_{l \in S} B_l$$

where $B_l$ is a branch consequence value for branch *l*, $R_{lk}$ is the predicted load level for refuse chute *k* in branch *l*, *J* is an optional branch-wise variable which may be set to zero, *P* is a power factor for controlling the impact of the predicted load level on the branch consequence value, $K_{lk}$ is a priority coefficient for refuse chute *k* in branch *l* and *S* is the considered plurality of branches.

The predicted load level $R_{lk}$ may for example be determined in the following way:

$$R_{lk} = \frac{F_{lk} + \dfrac{dF_{lk}}{dt} \cdot T_{pred}}{C_{lk}}$$

where $F_{lk}$ is an estimate of the current load level, $\dfrac{dF_{lk}}{dt}$ is an estimate of the load level growth rate, $T_{pred}$ is an individually set prediction time and $C_{lk}$ is the storage capacity of the refuse chute.

If the next-hop selection procedure proposed by the invention is combined with the use of a default structured emptying mode in which branches are selected for emptying in a predetermined order or sequence, the structured emptying sequence may be interrupted if the evaluation of system consequence values gives at hand that a deviation from the predetermined sequence is indeed more favorable. In this case, the optional branch-wise variable J may be helpful in controlling how much the next branch in a predetermined, structured branch selection sequence should be prioritized, compared to other branches.

The variable J may for example be set according to the following illustrative formula:

$$J = P_{interrupt} \cdot (100 - \frac{R_{lk}}{C_{lk}})$$

if the considered branch *l* is the next branch in turn according to the predetermined sequence, and

$$J = 0,$$

for all the other branches. $P_{interrupt}$ is a prioritization factor, also referred to as an interrupt factor, which has to be tuned to a suitable value between 0 and 1. Apparently, in this particular application, the effect of the variable J is that when it has a non-zero value it gives an additional contribution to the "load level" of all refuse chutes that belong the next branch in the predetermined sequence.

Although the invention often employs predictions spanning one hop ahead in time, it should be understood that two-hop predictions or longer multi-hop predictions may also be used by the invention. In fact, in some situations it may be necessary to consider two or more hops ahead in time to obtain satisfactory performance. However, in other situations, it is not certain that predictions two or more hops ahead in time will generally provide a more efficient algorithm.

For further details on load level measurements and prediction techniques, reference is made to the above-mentioned international application WO 01/05684. With respect to predictions based on growth rate estimates, any conventional procedures for determining consecutive load level representations and estimating the input flow growth rate may be used. The input flow growth rate may even be estimated based on the number of inlet door openings per time period. Apparently, it is important that the growth rate is estimated in such a way that the underlying trend is captured in an appropriate time frame. If it is difficult to estimate the growth rate in a meaningful way, it may be possible to approximate the growth rate by a constant value, at least temporarily.

### *Detailed implementation example*

In the following example, it is assumed that no hops are allowed during emptying of a given branch. Emptying of a branch normally (there are exceptions) means that all discharge valves that belong to the branch are opened.

The *next-hop algorithm* attempts to minimize the number of overloaded refuse chutes, which will reduce both operational disturbances as well as disturbances for end-users.

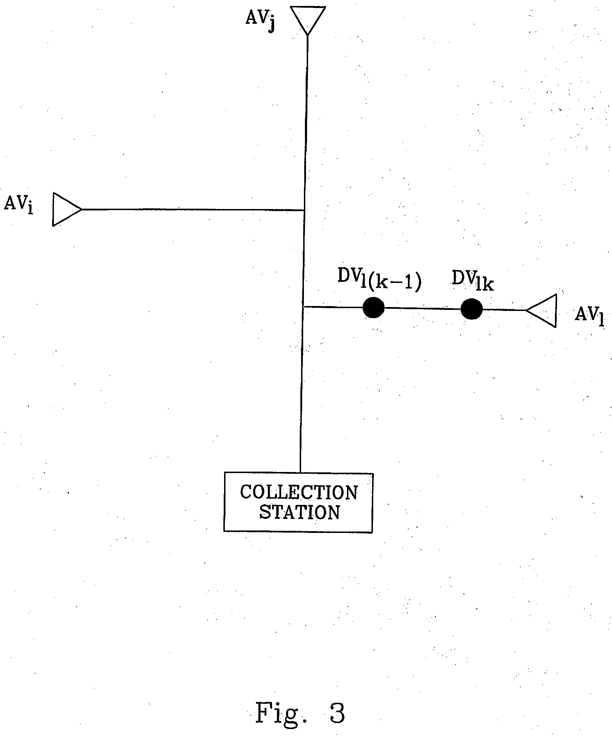

With reference to Fig. 3, the following definitions are made:

- $AV_i$ denotes the most recently emptied branch. The notation AV comes from the corresponding air inlet valve arranged at the end of the branch.

- $AV_j$ denotes the next-hop branch, assuming that all relevant next-hop candidates j are considered before a next-hop candidate is selected.

- $AV_l$ denotes the branch to be emptied after the emptying of branch $AV_j$ has been completed.

- $DV_{lk}$ denotes refuse chute *k* on branch $AV_l$. The notation DV comes from the corresponding discharge valve.

Assuming that branch $AV_i$ has just been emptied, it is desired to determine the consequences of switching to branch $AV_j$ (for all relevant next-hop candidates *j*): It is desirable to determine the risk that refuse chute $DV_{lk}$, i.e. refuse chute *k* on branch $AV_l$, becomes full before it can be emptied.

The time before the system can start emptying this refuse chute can be estimated as:

$$T_{AViAVj} + T_{AVj} + T_{AVjAVl} + T_{DVlk}$$

where $T_{AViAVj}$ is the time from completed emptying of branch $AV_i$ until emptying of branch $AV_j$ can start, $T_{AVj}$ is the time from emptying of branch $AV_j$ is started until emptying of branch $AV_j$ is completed (including after suction time within the branch), $T_{AVjAVl}$ is the time from completed emptying of branch $AV_j$ until emptying of branch $AV_l$ can start, and $T_{DVlk}$ is the time from emptying of branch $AV_l$ is started until emptying of $DV_{lk}$ can start.

The predicted load level for $DV_{lk}$ can thus be determined in the following way:

$$R_{lk} = \frac{F_{lk} + \frac{dF_{lk}}{dt} \cdot (T_{AViAVj} + T_{AVj} + T_{AVjAVl} + T_{DVlk})}{C_{u.}} \quad [\%]$$

using the same notations as above. This value can then be used a measure of the risk that $DV_{lk}$ becomes full if the system after completed emptying of branch $AV_i$ first empties branch $AV_j$ before it starts emptying branch $AV_l$.

If we multiply the above load level with a priority coefficient $K_{lk}$ for the particular refuse chute, and then performs a summation over all relevant refuse chutes in branch $AV_l$ we get a branch consequence value for this branch:

$$B_l = \sum_k R_{lk} \cdot K_{lk}$$

When using priority coefficients, it is important to set these coefficients so that they reflect the importance of emptying the respective refuse chutes. It may be beneficial to set the priority coefficient to 1 for those refuse chutes that have the smallest consequences in case of overloading, and set higher related values to the other refuse chutes. For a better overview and control of the prioritization process, it maybe useful to divide the refuse chutes into a limited number of priority categories, for example the least important refuse chutes may be assigned a priority coefficient equal to 1, refuse chutes of medium importance may be assigned a priority coefficient equal to 1.5 and the most important refuse chutes may be assigned a priority coefficient equal to 2. It is also possible to have a moving scale within each category, e.g. in proportion to the number of stories in the building.

A system consequence value can then be calculated by summing the branch consequence values for all branches in a set $S$ of considered branches:

$$B_{system} = \sum_{l \in S} B_l$$

It is normally a feasible approximation to consider all relevant branches except for the considered next-hop candidate branch $AV_j$ in the calculation of the system consequence value, especially if the number of refuse chutes is relatively low. In fact, in some circumstances, it may even be advantageous to exclude the next-hop candidate branch from the considered set S of branches when calculating the system consequence value.

System consequence values are then determined for all next-hop candidates ($j = 1, ..., N$, where $N$ is the total number of next-hop candidates), and the candidate having the most favorable (here the lowest) system consequence value is then preferably selected for emptying of refuse. In order to avoid unnecessary delays while still be able to use up-to-date information as a basis for the next-hop decision, the calculations required for determining relevant system consequence values and selecting hop to a next branch should preferably be made within the after-suction time from the last discharge valve in the branch currently being emptied.

*Optional prioritization of predetermined sequence*

As mentioned above, the refuse collection system may alternatively be operated in a default structured emptying mode in which branches are selected for emptying in a predetermined order or sequence. This sequence is often optimized for maximum total emptying efficiency in terms of e.g. total emptying time and/or power consumption. Such a structured mode of operation using a predetermined sequence can be effectively combined with the next-hop selection procedure proposed by the invention by interrupting the structured emptying sequence and selecting another next-hop candidate if the above evaluation of system consequence values gives at hand that such a deviation from the predetermined sequence is much more favorable. Preferably, the previously mentioned variable J is employed to control the tendency of the control system to interrupt the structured emptying sequence. In a simplified realization, however, the system consequence value $B_{sequence}$ for the branch in turn according to the predetermined sequence may simply be compared to the most favorable system consequence value $B_{system}(min)$ of the considered next-hop candidates, and if $B_{system}(min) < P_{interrupt} \cdot B_{sequence}$ the control system selects the most favorable candidate rather than the branch given by the predetermined sequence. The interrupt factor $P_{interrupt}$ is typically a given value between 0 and 1, which controls the tendency of the control system to interrupt the structured emptying sequence.

*Optional power factor*

In an alternative approach, previously mentioned above, the branch consequence values are determined as:

$$B_l = \sum_k (R_{lk})^P \cdot K_{lk} \qquad for\ l \in S$$

where $P$ is the power factor for controlling the impact of the predicted load level on the branch consequence value. The subsequent system consequence value is calculated in the same way as before. Unless an appropriate power factor is used, several half-full refuse chutes in a branch may give a larger contribution than an almost full refuse chute in another branch. By using a power factor different from 1, a non-linear dependency is obtained. It is typically important that when a refuse chute is closer and closer to being full, this particular refuse chute should give a larger and larger contribution to the branch consequence value. The actual configuration of the power factor depends on the particular application in question, but a suitable default value may be $P = 2$ in order to reduce the number of overloaded refuse chutes and at the same time maintain a certain robustness. With such a setting, a refuse chute with a predicted load level of 90% will give a value of $(R_{lk})^2$ equal to 0.81, while a predicted load level of 10% gives a value of $(R_{lk})^2$ equal to 0.01. This means that only marginally loaded refuse chutes become almost negligible compared to refuse chutes that are quite full. For example, two refuse chutes with a predicted load level of 60% each gives a $(R_{lk})^2$ value equal to 0.36, which together sum up to 0.72. The value 0.72 for the two 60% loaded refuse chutes can then be compared to the single 90% loaded refuse chute which has a $(R_{lk})^2$ equal tao 0.81. For $P = 2$, it takes two refuse chutes that are loaded to about 64% to get a larger contribution than a single 90% loaded refuse chute.

*Branch-oriented approach*

In a somewhat simpler alternative, a branch consequence value $B_j$ is calculated for each next-hop candidate $j$ based on the predicted load levels (possibly weighted by respective priority coefficients) within the branch. The algorithm may then select hop to a next branch among those candidates that have the highest branch consequence values.

This approach can also be combined with conventional structured emptying according to a predetermined branch sequence by prioritizing the sequence via a prioritization factor. The prioritization factor controls the tendency of interrupting the structured emptying sequence so that the branch in turn according to the predetermined sequence may still be selected instead of a branch candidate with only a slightly higher branch consequence value.

The branch-oriented approach may generally be extended by taking the time required to switch to a given branch into account, e.g. by summing the weighted load levels and dividing this sum by the switching time when calculating the corresponding branch consequence value.

*General considerations*

In order to reduce the time required for emptying a given branch, it is possible to skip certain refuse chutes within the branch, e.g. refuse chutes with a load level that is below a given threshold, say e.g. 20%.

A suitable condition for initiating an emptying "cycle" could be that any refuse chute has a load level that exceeds a given first threshold, say e.g. 45%, or that several refuse chutes have a load level exceeding a given second threshold, say e.g. 35%.

A suitable condition for finishing an emptying "cycle" could be that no refuse chute in the system has a load level that exceeds a given threshold, say e.g. 60%, and that no refuse chute in a branch that has not been emptied should have a load level that exceeds another threshold, say e.g. 30%.

The configuration of the above thresholds has to be made in accordance with the characteristics of each particular refuse collection system.

*Computer-based implementation*

The above steps can be performed by a computer, by executing program elements such as functions, procedures or equivalents. These program elements may be written in a functional programming language, an object oriented programming language or any other suitable programming language. Conventional processor technologies, including also PLC (Programmable Logic Controller) technologies, may be used for implementation.

The refuse collection system is preferably controlled by a computer-implemented control system, which has functions for monitoring and controlling the refuse collection system.

### Control system overview

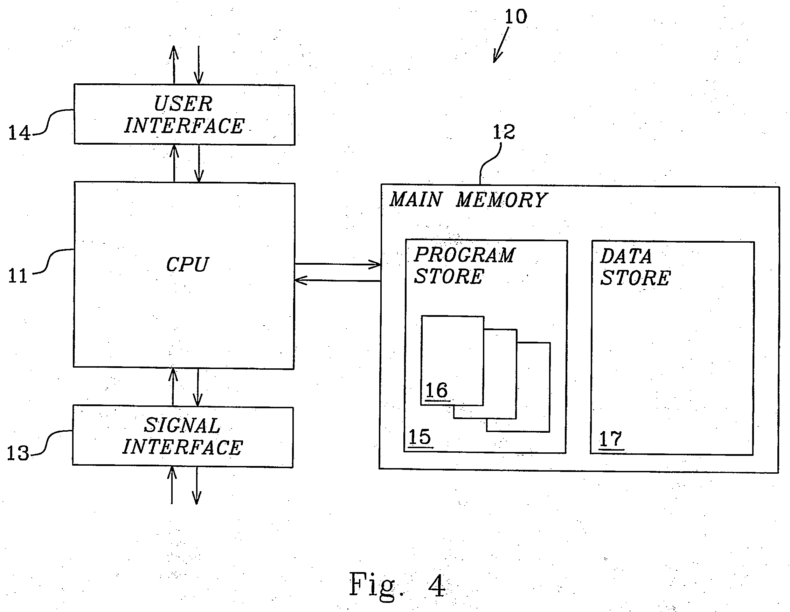

Fig. 4 is a schematic drawing of a computer-implemented control system according to a preferred embodiment of the invention. The control system 10 basically comprises a computer or processor system in which one or more computer programs are being executed to perform the functions for monitoring and controlling the refuse collection system. The computer-based control system includes a CPU 11 or equivalent, a main memory 12, a conventional signal interface 13 and a conventional user interface 14. The main memory 12 has a program store 15 for computer programs 16 and a data store 17 for data. The control system is connected to the other components of the refuse collection system through conventional communication links and the control system utilizes the signal interface 13 for receiving signal information from the refuse collection system and for sending control signals to discharge valves, air inlet valves, sectioning valves and the main valve of the refuse collection system. In particular, the signal interface 13 is used for receiving load level information from one or more level sensors in the refuse collection system. This level information is then processed by the computer program(s) 16 running on the computer system, and the above prediction-based next-hop selection procedure, for example as described, is thereby executed, resulting in appropriate control signals being sent to the relevant discharge valves, air inlet valves and main valve for effectuating controlled emptying and collection of refuse.

### Numerical examples

For the purpose of providing a more intuitive understanding of the invention, some numerical examples will now be given.

*Example 1:*

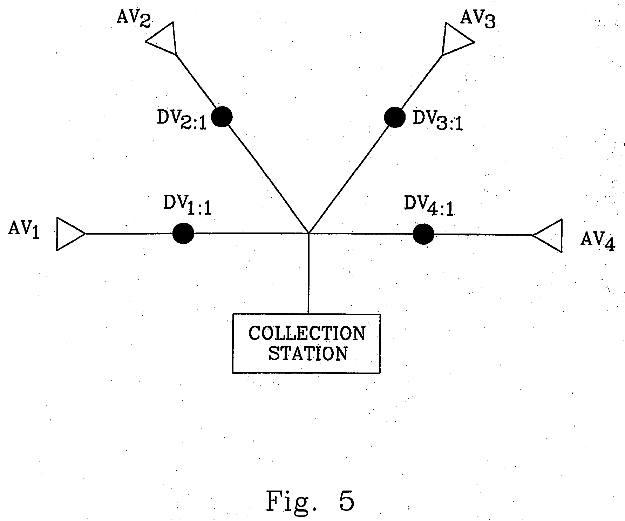

With reference to the simplified example of Fig. 5, assume that we have a system with four branches with corresponding air inlet valves $AV_1$-$AV_4$, and that each branch has a single refuse chute with a corresponding discharge valve DV.

Furthermore, assume that branch $AV_1$ has just been emptied and that a next branch should be selected for emptying and collection of refuse. The refuse collection system is designed in such a way that $T_{AViAVj}$ is zero for all combinations of $i$ and $j$, and it can be assumed that the emptying time is the same for all branches.

Assume that we have the following predicted load levels:

| | |
|---|---|
| DV1:1 | 20% |
| DV2:1 | 80% |
| DV3:1 | 60% |
| DV4:1 | 60% |

In this example, the next-hop candidate itself is excluded from the considered set of branches when calculating the corresponding system consequence value. Assuming that $P$ is equal to 2 and that the priority coefficients $K_{lk}$ are all equal to 1, the system consequence value $B_{system(j)}$ for each next-hop candidate branch $AV_j$, $j$ = 1 to 4 can be determined as:

$$B_{system}(1) = B_2 + B_3 + B_4 = (0.8)^2 + (0.6)^2 + (0.6)^2 = 1.36$$

$$B_{system}(2) = B_1 + B_3 + B_4 = (0.2)^2 + (0.6)^2 + (0.6)^2 = 0.76$$

$$B_{system}(3) = B_1 + B_2 + B_4 = (0.2)^2 + (0.8)^2 + (0.6)^2 = 1.04$$

$$B_{system}(4) = B_1 + B_2 + B_3 = (0.2)^2 + (0.8)^2 + (0.6)^2 = 1.04$$

The lowest system consequence value 0.76 is associated with branch $AV_2$ and therefore the *next-hop algorithm*

selects branch $AV_2$.

*Example 2:*

Consider three branches $AV_1$ and $AV_2$ and $AV_3$, and that we have just emptied branch $AV_1$. In this example, assume that we have the following predicted load levels and priority coefficients:

| Branch AV1 | Level | Coefficient |
| --- | --- | --- |
| DV1:1 | 10% | 1 |
| DV1:2 | 20% | 1 |
| Branch AV2 | | |
| DV2:1 | 30% | 1 |
| DV2:2 | 40% | 1.5 |
| DV2:3 | 30% | 1 |
| DV2:4 | 20% | 1 |
| | | |
| Branch AV3 | | |
| DV3:1 | 20% | 2 |
| DV3:2 | 20% | 1 |
| DV3:3 | 80% | 1 |

For this situation, using $P = 2$, the system consequence values will be:

$$B_{system}(1) = B_2 + B_3 = ((0.3)^2 \cdot 1 + (0.4)^2 \cdot 1.5 + (0.3)^2 \cdot 1 + (0.2)^2 \cdot 1) + ((0.2)^2 \cdot 2 + (0.2)^2 \cdot 1 + (0.8)^2 \cdot 1) = (0.09 + 0.16 \cdot 1.5 + 0.09 + 0.04) + (0.04 \cdot 2 + 0.04 + 0.64) = 0.46 + 0.76 = 1.22$$

$$B_{system}(2) = B_1 + B_3 = ((0.1)^2 \cdot 1 + (0.2)^2 \cdot 1) + ((0.2)^2 \cdot 2 + (0.2)^2 \cdot 1 + (0.8)^2 \cdot 1) = (0.01 + 0.04) + (0.04 \cdot 2 + 0.04 + 0.64) = 0.05 + 0.76 = 0.81$$

$$B_{system}(3) = B_1 + B_2 = ((0.1)^2 \cdot 1 + (0.2)^2 \cdot 1) + ((0.3)^2 \cdot 1 + (0.4)^2 \cdot 1.5 + (0.3)^2 \cdot 1 + (0.2)^2 \cdot 1) = (0.01 + 0.04) + (0.09 + 0.16 \cdot 1.5 + 0.09 + 0.04) = 0.05 + 0.46 = 0.51$$

Apparently, the most favorable system consequence value is obtained for the next-hop candidate branch $AV_3$, mainly because of the relatively high load level for DV3:3. It can also be seen that the least favorable choice is branch $AV_1$ since this branch has just been emptied and the predicted load levels are quite low.

In this example, a branch-oriented *next-hop algorithm* would result in the same next-hop selection, since the highest branch consequence value among $B_1$ (0.05), $B_2$ (0.46) and $B_3$ (0.76) is that for branch $AV_3$, indicating that it is most urgent to empty branch $AV_3$.

Consider the subsequent situation when we have just emptied branch AV3 and we have the following predicted load levels and priority coefficients:

| Branch AV1 | Level | Coefficient |
| --- | --- | --- |
| DV1:1 | 30% | 1 |
| DV1:2 | 40% | 1 |

(continued)

Branch AV2

| | | |
|---|---|---|
| DV2:1 | 40% | 1 |
| DV2:2 | 50% | 1.5 |
| DV2:3 | 40% | 1 |
| DV2:4 | 30% | 1 |

Branch AV3

| | | |
|---|---|---|
| DV3:1 | 15% | 2 |
| DV3:2 | 10% | 1 |
| DV3:3 | 20% | 1 |

Now, the system consequence values will be:

$$B_{system}(1) = B_2 + B_3 = ((0.4)^2 \cdot 1 + (0.5)^2 \cdot 1.5 + (0.4)^2 \cdot 1 + (0.3)^2 \cdot 1) + ((0.15)^2 \cdot 2 +$$
$$(0.1)^2 \cdot 1 + (0.2)^2 \cdot 1) = (0.16 + 0.25 \cdot 1.5 + 0.16 + 0.09) + (0.0225 \cdot 2 + 0.01 + 0.04) =$$
$$0.785 + 0.095 = 0.88$$

$$B_{system}(2) = B_1 + B_3 = ((0.3)^2 \cdot 1 + (0.4)^2 \cdot 1) + ((0.15)^2 \cdot 2 + (0.1)^2 \cdot 1 + (0.2)^2 \cdot 1) =$$
$$(0.09 + 0.16) + (0.0225 \cdot 2 + 0.01 + 0.04) = 0.25 + 0.095 = 0.345$$

$$B_{system}(3) = B_1 + B_2 = ((0.3)^2 \cdot 1 + (0.4)^2 \cdot 1) + ((0.4)^2 \cdot 1 + (0.5)^2 \cdot 1.5 + (0.4)^2 \cdot 1 +$$
$$(0.3)^2 \cdot 1) = (0.09 + 0.16) + (0.16 + 0.25 \cdot 1.5 + 0.16 + 0.09) = 0.25 + 0.785 = 1.035$$

Apparently, the most favorable choice is branch $AV_2$ since $B_{system}(2)$ is by far the lowest system consequence value. A branch-oriented approach would give the same result, since the highest branch consequence value among $B_1$ (0.25), $B_2$ (0.785) and $B_3$ (0.095) is that for branch $AV_2$.

The difference in performance between a system-oriented *next-hop algorithm* and a branch-oriented *next-hop algorithm* becomes apparent in larger systems with many branches, where the system-oriented approach is better.

The embodiments described above are merely given as examples, and it should be understood that the present invention is not limited thereto. Further modifications, changes and improvements which retain the basic underlying principles disclosed and claimed herein are within the scope of the invention as defined in the appended claims.

**Claims**

1. A method of operating a vacuum refuse collection system (1) having a multi-branch transport pipe system (5) with a number of refuse chutes (3) connected thereto, wherein said method comprises automated selection of a hop to a next branch for emptying of refuse, **characterized in that** the automated selection is based on the following procedure:

   - for each of a number of possible next-hop candidates:

      a) predicting (S1) representations of future refuse chute load levels in a plurality of branches, said predictions spinning at least one hop ahead in time; and
      b) determining (S2) a system consequence value based on said predicted representations of future refuse chute load levels; and

- selecting hop to a next branch among those candidates that have the most favorable system consequence values.

**2.** The method according to claim 1, wherein said step (S2) of determining a system consequence value further comprises the steps of:

- performing weighting of said predicted representations of future refuse chute load levels by means of respective priority coefficients; and
- determining said system consequence value based on said weighted predicted representations of future load levels.

**3.** The method according to claim 1, wherein said step (S2) of determining a system consequence value further comprises the steps of:

- determining, for each branch of said plurality of branches, a branch consequence value based on predicted representations of future load levels of refuse chutes within the branch; and
- determining said system consequence value as a sum of said branch consequence values.

**4.** The method according to claim 1, wherein said step (S1) of predicting representations of future refuse chute load levels comprises the step of predicting, for each of a number of refuse chutes within said plurality of branches, a representation of a future load level for the refuse chute at an expected time for the next emptying of the refuse chute considering a prediction path including at least one hop.

**5.** The method according to claim 1, wherein said step (S1) of predicting representations of future refuse chute load levels comprises the step of predicting, for each considered refuse chute, a representation of future refuse chute load level based on consecutive estimates of the load level in the refuse chute.

**6.** The method according to claim 1, wherein a predetermined branch selection order is interrupted it the system consequence value for a hop to the branch in turn according to the predetermined order is less favorable, to a given degree, than the system consequence value for another next-hop candidate.

**7.** The method according to claim 1, wherein said step (S2) of determining, for each of a number of possible next-hop candidates, a system consequence value $B_{system}$ is performed according to the following algorithm:

$$B_l = \sum_k (R_{lk} + J)^P \cdot K_{lk} \qquad for\ l \in S$$

$$B_{system} = \sum_{l \in S} B_l$$

where $B_l$ is a branch consequence value for branch $l$, $Rlk$ is the predicted load level for refuse chute $k$ in branch $l$, $J$ is an optional branch-wise variable which may be set to zero, $P$ is a power factor for controlling the impact of the predicted load level on the branch consequence value, $Klk$ is a priority coefficient for refuse chute $k$ in branch $l$ and $S$ is the considered plurality of branches.

**8.** The method according to claim 7, wherein the predicted load level $Rlk$ is determined in the following way:

$$R_{lk} = \frac{F_{lk} + \dfrac{dF_{lk}}{dt} \cdot T_{pred}}{C_{lk}}$$

where $F_{lk}$ is an estimate of the current load level. $\dfrac{dF_{lk}}{dt}$ is an estimate of the load level growth rate, $T_{pred}$ is an individually set prediction time and $C_{lk}$ is the storage capacity of the refuse chute.

9. The method according to claim 1, wherein the considered next-hop candidate branch is excluded from said plurality of branches.

10. A control system (10) for controlling operation of a vacuum refuse collection system (1) having a multi-branch transport pipe system (5) with a number of refuse chutes (3) connected thereto, said control system being operable for selecting hop to a next branch for emptying of refuse, **characterized in that** said control system (10) is adapted to carry out the method of any claims 1-9 and comprises:

> - means for determining, for each of a number of possible next-hop candidates, a system consequence value based on predicted representations of future refuse chute load levels in a plurality of branches, said predictions spanning at least one hop ahead in time; and
> - means for selecting hop to a next branch among those candidates that have the most favorable system consequence values.

11. The control systems according to claim 10, wherein said means for determining, a system consequence value further comprises:

> - means for performing weighting of said predicted representation of future refuse chute load levels by means of respective priority coefficients; and
> - means for determining said system consequence value based on said weighted predicted representations of future load levels.

12. The control system according to claim 10, wherein said means for determining a system consequence value further comprises:

> - means for determining, for each branch of said plurality of branches, a branch consequence value based on predicted representations of future load levels of refuse chutes within the branch; and
> - means for determining said system consequence value as a sum of said branch consequence values.

13. The control system according to claim 10, wherein said means for determining a system consequence value further comprises:

> - means for predicting, for each of a number of refuse chutes within said plurality of branches, a representation of a future load level for the refuse chute at an expected time for the next emptying of the refuse chute considering a prediction path including at least one hop; and
> - means for determining said system consequence value based on said predicted representations of future refuse chute load levels.

14. The control system according to claim 13, wherein said means for predicting a representation of a future refuse chute load level is operable for performing the prediction based on consecutive estimates of the load level in the refuse chute.

15. The control system according to claim 10, wherein said control system is operable for interrupting a predetermined branch selection order if the system consequence value for a hop to the branch in turn according to the predetermined order is less favorable, to a given degree, than the system consequence value for another next-hop candidate.

**16.** The control system according to claim 10, wherein said means for determining, for each of a number of possible next-hop candidates, a system consequence value $B_{system}$ operates according to the following algorithm:

$$B_I = \sum_k (R_{lk} + J)^P \cdot K_{lk} \qquad for\ l \in S$$

$$B_{system} = \sum_{l \in S} B_l$$

where $Bl$ is a branch consequence value for branch $l$, $Rlk$ is the predicted load level for refuse chute $k$ in branch $l$, $J$ is an optional branch-wise variable which may be zero, $P$ is a power factor for controlling the impact of the predicted load level on the branch consequence value, $Klk$ is a priority coefficient for refuse chute $k$ in branch $l$ and $S$ is the considered plurality of branches.

**17.** The control system according to claim 16, wherein said control system is operable for determining, the predicted load level $Rlk$ in the following way:

$$R_{lk} = \frac{F_{lk} + \dfrac{dF_{lk}}{dt} \cdot T_{pred}}{C_{lk}}$$

where $Flk$ is an estimate of the current load level, $\dfrac{dF_{lk}}{dt}$ is an estimate of the load level growth rate, $T_{Pred}$ is an individually set prediction time and $C_{lk}$ is the storage capacity of the refuse chute.

**18.** The control system according to claim 10, wherein the considered next-hop candidate branch is excluded from said plurality of branches.

**19.** A vacuum refuse collection system (1) comprising a control system (10) according to any of the claims 10-18.

**20.** A computer program product for controlling, when running on a computer (11), operation of a multi-branch refuse collection system (1), wherein said computer program product comprises program means (16) for making the computer perform selection of a hop to a next branch for emptying of refuse according to the following procedure:

    - for each of a number of possible next-hop candidates:

        a) predicting representations of future refuse chute load levels in a plurality of branches, said predictions spanning at least one hop ahead in time; and
        b) determining a system consequence value based on said predicted representations of future refuse chute load levels; and

    - selecting hop to a next branch among those candidates that have the most favorable system consequence values.

**21.** A method of operating a vacuum refuse collection system (1) having a multi-branch transport pipe system (5) with a number of refuse chutes (3) connected thereto, wherein said method comprises automated selection of a hop to a next branch for emptying of refuse, **characterized in that** the automated selection is based on the following procedure:

    - for each of a number of possible next-hop candidates:

a) predicting representations of future refuse chute load levels within the next-hop candidate branch, said predictions spanning at least one hop ahead in time; and

b) determining a branch consequence value based on said predicted representations of future refuse chute load levels; and

- selecting hop to a next branch among those candidates that have the highest branch consequence values.

**Patentansprüche**

1. Verfahren zum Betrieb eines Vakuum-Müllsammelsystems (1) mit einem verzweigten Transportrohrsystem (5) mit einer Reihe von damit verbundenen Müllabwurfschächten (3), wobei das Verfahren die automatisierte Auswahl eines Sprungs zu einer nächsten Abzweigung zum Leeren des Mülls umfasst, **dadurch gekennzeichnet, dass** die automatisierte Auswahl auf einem der folgenden Verfahren basiert:

   - für jeden einer Reihe möglicher Kandidaten für den nächsten Sprung:

   a) Vorhersagen (S1) der Darstellungen der zukünftigen Füllstände der Müllabwurfschächte in einer Vielzahl von Abzweigungen, wobei sich die Vorhersagen zeitlich mindestens auf einen Sprung im Voraus erstrecken; und

   b) Bestimmen (S2) eines Wertes für die Auswirkung auf das System auf der Grundlage der vorhergesagten Darstellungen der zukünftigen Füllstände der Müllabwurfschächte; und

   - Auswählen des Sprungs zur nächsten Abzweigung unter denjenigen Kandidaten, die die günstigsten Werte für die Auswirkung auf das System haben.

2. Verfahren nach Anspruch 1, wobei der Schritt (S2) des Bestimmens eines Wertes für die Auswirkung auf das System weiter folgende Schritte umfasst:

   - Durchführen der Gewichtung der vorhergesagten Darstellungen der zukünftigen Füllstände der Müllabwurfschächte mittels verschiedener Prioritätskoeffizienten; und
   - Bestimmen des Wertes für die Auswirkung auf das System auf der Grundlage der gewichteten Darstellungen der zukünftigen Füllstände.

3. Verfahren nach Anspruch 1, wobei der Schritt (S2) des Bestimmens eines Wertes für die Auswirkung auf das System weiter folgende Schritte umfasst:

   - Bestimmen eines Wertes für die Auswirkung auf die Abzweigung für jede Abzweigung der Vielzahl von Abzweigungen auf der Grundlage der vorhergesagten Darstellungen der zukünftigen Füllstände der Müllabwurfschächte innerhalb der Abzweigung; und
   - Bestimmen des Wertes für die Auswirkung auf das System als eine Summe der Werte für die Auswirkung auf die Abzweigung.

4. Verfahren nach Anspruch 1, wobei der Schritt (S1) des Vorhersagens der Darstellungen der zukünftigen Füllstände der Müllabwurfschächte den Schritt des Vorhersagens einer Darstellung eines zukünftigen Füllstandes für den Müllabwurfschacht zu einem für die nächste Leerung des Müllabwurfschachtes erwarteten Zeitpunkt unter Berücksichtigung eines Prognosepfades mit mindestens einem Sprung für jeden einer Reihe von Müllabwurfschächten innerhalb der Vielzahl von Abzweigungen umfasst.

5. Verfahren nach Anspruch 1, wobei der Schritt (S1) des Vorhersagens der Darstellungen der zukünftigen Füllstände der Müllabwurfschächte den Schritt des Vorhersagens einer Darstellung eines zukünftigen Füllstandes für den Müllabwurfschacht auf der Grundlage von aufeinanderfolgenden Schätzungen des Füllstands im Müllabwurfschacht für jeden berücksichtigten Müllabwurfschacht umfasst.

6. Verfahren nach Anspruch 1, wobei die vorgegebene Reihenfolge der Auswahl der Abzweigungen unterbrochen wird, wenn der Wert für die Auswirkung auf das System für einen Sprung zur gemäß der vorgegebenen Reihenfolge nächsten Abzweigung in einem bestimmten Maß weniger günstig ist als der Wert für die Auswirkung auf das System für einen anderen Kandidaten für den nächsten Sprung.

**7.** Verfahren nach Anspruch 1, wobei der Schritt (S2) des Bestimmens eines Wertes für die Auswirkung auf das System $B_{system}$ für jeden einer Reihe möglicher Kandidaten für den nächsten Sprung gemäß dem folgenden Algorithmus durchgeführt wird:

$$B_1 = \sum_k (R_{1k} + J)^P * K_{1k} \qquad \text{für } 1 \in S$$

$$B_{system} = \sum_{l \in S} B_1$$

wobei $B_l$ ein Wert für die Auswirkung auf die Abzweigung für die Abzweigung 1 ist, $R_{lk}$ der vorhergesagte Füllstand für den Müllabwurfschaft $k$ in Abzweigung 1 ist, J eine optionale Abzweigungs-spezifische Variable ist, die auf Null gesetzt werden kann, $P$ ein Leistungsfaktor für die Kontrolle der Auswirkung des vorhergesagten Füllstandes auf den Wert für die Auswirkung auf die Abzweigung ist, $K_{lk}$ ein Prioritätskoeffizient für den Müllabwurfschacht $k$ in der Abzweigung $l$ ist und $S$ die berücksichtigte Vielzahl von Abzweigungen ist.

**8.** Verfahren nach Anspruch 7, wobei der vorhergesagte Füllstand $R_{lk}$ auf folgende Weise bestimmt wird:

$$R_{1k} = \frac{Flk + \frac{dFlk}{dt}*Tpred}{Clk}$$

wobei $F_{lk}$ eine Schätzung des aktuellen Füllstandes ist, $\frac{dFlk}{dt}$ eine Schätzung der Zuwachsrate des Füllstandes ist, $T_{pred}$ eine individuell eingestellte Vorhersagezeit ist und $C_{lk}$ die Lagerkapazität des Müllabwurfschachtes ist.

**9.** Verfahren nach Anspruch 1, wobei die Abzweigung, die als Kandidat für den nächsten Sprung berücksichtigt wird, aus der Vielzahl der Abzweigungen ausgenommen wird.

**10.** Regelungssystem (10) für die Regelung des Betriebs eines Vakuum-Müllsammelsystems (1) mit einem verzweigten Transportrohrsystem (5) mit einer Reihe von damit verbundenen Müllabwurfschächten (3), wobei das Regelungssystem so betrieben werden kann, dass der Sprung zu einer nächsten Abzweigung zum Leeren des Mülls gewählt werden kann, **dadurch gekennzeichnet, dass** das Regelungssystem (10) so angepasst ist, dass es das Verfahren nach einem der Ansprüche 1 - 9 ausführen kann, und Folgendes umfasst:

- Mittel zum Bestimmen eines Wertes für die Auswirkung auf das System für jeden einer Reihe möglicher Kandidaten für den nächsten Sprung auf der Grundlage der vorhergesagten Darstellungen der zukünftigen Füllstände der Müllabwurfschächte in einer Vielzahl von Abzweigungen, wobei sich die Vorhersagen zeitlich mindestens auf einen Sprung im Voraus erstrecken; und
- Mittel zum Auswählen des Sprungs zu einer nächsten Abzweigung unter denjenigen Kandidaten, die die günstigsten Werte für die Auswirkung auf das System haben.

**11.** Regelungssystem nach Anspruch 10, wobei die Mittel zum Bestimmen eines Wertes für die Auswirkung auf das System weiter umfassen:

- Mittel zum Durchführen der Gewichtung der vorhergesagten Darstellungen der zukünftigen Füllstände der Müllabwurfschächte mittels verschiedener Prioritätskoeffizienten; und
- Mittel zum Bestimmen der Werte für die Auswirkung auf das System auf der Grundlage der gewichteten vorhergesagten Darstellungen zukünftiger Füllstände.

**12.** Regelungssystem nach Anspruch 10, wobei die Mittel zum Bestimmen eines Wertes für die Auswirkung auf das System weiter Folgendes umfassen:

- Mittel zum Bestimmen eines Wertes für die Auswirkung auf die Abzweigung für jede Abzweigung der Vielzahl von Abzweigungen auf der Grundlage der vorhergesagten Darstellungen zukünftiger Füllstände von Müllabwurfschächten innerhalb der Abzweigung; und
- Mittel zum Bestimmen des Wertes für die Auswirkung auf das System als Summe der Werte für die Auswirkung auf die Abzweigung.

13. Regelungssystem nach Anspruch 10, wobei die Mittel zum Bestimmen eines Wertes für die Auswirkung auf das System weiter umfassen:

- Mittel zum Vorhersagen einer Darstellung eines zukünftigen Füllstandes für den Müllabwurfschacht zu einem für die nächste Leerung des Müllabwurfschachtes erwarteten Zeitpunkt für jeden einer Reihe von Müllabwurfschächten innerhalb der Vielzahl von Abzweigungen unter Berücksichtigung eines Prognosepfades mit mindestens einem Sprung; und
- Mittel zum Bestimmen des Wertes für die Auswirkung auf das System auf der Grundlage der Darstellungen der zukünftigen Füllstände der Müllabwurfschächte.

14. Regelungssystem nach Anspruch 13, wobei die Mittel zum Vorhersagen einer Darstellung eines zukünftigen Füllstandes des Müllabwurfschachtes so betrieben werden können, dass die Vorhersage auf der Grundlage aufeinanderfolgender Schätzungen des Füllstandes im Müllabwurfschacht durchgeführt wird.

15. Regelungssystem nach Anspruch 10, wobei das Regelungssystem so betrieben werden kann, dass eine vorgegebene Reihenfolge für die Auswahl der Abzweigung unterbrochen werden kann, wenn der Wert für die Auswirkung auf das System für einen Sprung zur gemäß der vorgegebenen Reihenfolge nächsten Abzweigung in einem bestimmten Maß weniger günstig ist als der Wert für die Auswirkung auf das System für einen anderen Kandidaten für den nächsten Sprung.

16. Regelungssystem nach Anspruch 10, wobei die Mittel zum Bestimmen eines Wertes für die Auswirkung auf das System $B_{system}$ für jeden einer Reihe möglicher Kandidaten für den nächsten Sprung gemäß dem folgenden Algorithmus betrieben werden:

$$B_l = \sum_k (R_{lk} + J)^P * K_{lk} \qquad \text{für } l \in S$$

$$B_{system} = \sum_{l \in S} B_l$$

wobei $B_l$ ein Wert für die Auswirkung auf die Abzweigung für die Abzweigung $1$ ist, $R_{lk}$ der vorhergesagte Füllstand für den Müllabwurfschaft $k$ in Abzweigung $1$ ist, $J$ eine optionale Abzweigungs-spezifische Variable ist, die auf Null gesetzt werden kann, $P$ ein Leistungsfaktor für die Kontrolle der Auswirkung des vorhergesagten Füllstandes auf den Wert für die Auswirkung auf die Abzweigung ist, $K_{lk}$ ein Prioritätskoeffizient für den Müllabwurfschacht $k$ in der Abzweigung $1$ ist und $S$ die berücksichtigte Vielzahl von Abzweigungen ist.

17. Regelungssystem nach Anspruch 16, wobei das Regelungssystem zum Bestimmen des vorhergesagten Füllstands $R_{lk}$ auf folgende Weise betrieben werden kann:

$$R_{lk} = \frac{Flk + \frac{dFlk}{dt} * Tpred}{Clk}$$

wobei $F_{lk}$ eine Schätzung des aktuellen Füllstandes ist, $\frac{dFlk}{dt}$ eine Schätzung der Zuwachsrate des Füllstandes ist, $T_{pred}$ eine individuell eingestellte Vorhersagezeit ist und $C_{lk}$ das Fassungsvermögen des Müllabwurfschachtes ist.

18. Regelungssystem nach Anspruch 10, wobei die Abzweigung, die als Kandidat für den nächsten Sprung berücksichtigt wird, aus der Vielzahl der Abzweigungen ausgenommen wird.

**19.** Vakuum-Müllsammelsystems (1), das ein Regelungssystem (10) nach einem der Ansprüche 10 - 18 umfasst.

**20.** Computerprogrammprodukt zur Regelung des Betriebs eines verzweigten Müllsammelsystems (1), wenn es auf einem Computer (11) läuft, wobei das Computerprogrammprodukt Programmmittel (16) umfasst, um den Computer die Auswahl eines Sprungs zu einer nächsten Abzweigung zum Leeren des Mülls gemäß dem folgenden Verfahren durchführen zu lassen:

- für jeden einer Reihe möglicher Kandidaten für den nächsten Sprung:

a) Vorhersagen der Darstellungen der zukünftigen Füllstände der Müllabwurfschächte in einer Vielzahl von Abzweigungen, wobei sich die Vorhersagen zeitlich mindestens auf einen Sprung im Voraus erstrecken; und
b) Bestimmen eines Wertes für die Auswirkung auf das System auf der Grundlage der vorhergesagten Darstellungen der zukünftigen Füllstände der Müllabwurfschächte; und

- Auswählen des Sprungs zu einer nächsten Abzweigung unter denjenigen Kandidaten, die die günstigsten Werte für die Auswirkung auf das System haben.

**21.** Verfahren zum Betrieb eines Vakuum-Müllsammelsystems (1) mit einem verzweigten Transportrohrsystem (5) mit einer Reihe von damit verbundenen Müllabwurfschächten (3), wobei das Verfahren die automatisierte Auswahl eines Sprungs zu einer nächsten Abzweigung zum Leeren des Mülls umfasst, **dadurch gekennzeichnet, dass** die automatisierte Auswahl auf einem der folgenden Verfahren basiert:

- für jeden einer Reihe möglicher Kandidaten für den nächsten Sprung:

a) Vorhersagen der Darstellungen der zukünftigen Füllstände der Müllabwurfschächte innerhalb der Abzweigung, die ein Kandidat für den nächsten Sprung ist, wobei sich die Vorhersagen zeitlich mindestens auf einen Sprung im Voraus erstrecken; und
b) Bestimmen eines Wertes für die Auswirkung auf die Abzweigung auf der Grundlage der vorhergesagten Darstellungen der zukünftigen Füllstände der Müllabwurfschächte; und

- Auswählen des Sprungs zu einer nächsten Abzweigung unter denjenigen Kandidaten, die die höchsten Werte für die Auswirkung auf die Abzweigung haben.

**Revendications**

**1.** Procédé pour le fonctionnement d'un système de collecte de déchets par le vide (1) ayant un système de conduits de transport à branches multiples (5) avec une pluralité de chutes vide-ordures (3) connectées à celui-ci, dans lequel ledit procédé comprend la sélection automatisée d'un saut à une branche suivante pour le vidage de déchets, **caractérisé en ce que** la sélection automatisée est basée sur la procédure suivante :

- pour chacun d'une pluralité de candidates au saut suivant possibles :

a) la prédiction (S1) de représentations de niveaux de charge de chute vide-ordures futurs dans une pluralité de branches, lesdites prédictions couvrant au moins un saut en avant dans le temps ; et
b) la détermination (S2) d'une valeur de conséquence de système sur la base desdites représentations prédites de niveaux de charge de chute vide-ordures futurs ; et

- la sélection d'un saut à une branche suivante parmi les candidates qui ont les valeurs de conséquence de système les plus favorables.

**2.** Procédé selon la revendication 1, dans lequel ladite étape (S2) de détermination d'une valeur de conséquence de système comprend en outre les étapes suivantes :

- l'exécution d'une pondération desdites représentations prédites de niveaux de charge de chute vide-ordures futurs au moyen de coefficients de priorité respectifs ; et

- la détermination de ladite valeur de conséquence de système sur la base desdites représentations prédites pondérées de niveaux de charge futurs.

**3.** Procédé selon la revendication 1, dans lequel ladite étape (S2) de détermination d'une valeur de conséquence de système comprend en outre les étapes suivantes :

- la détermination, pour chaque branche de ladite pluralité de branches, d'une valeur de conséquence de branche sur la base de représentations prédites de niveaux de charge futurs de chutes vide-ordures à l'intérieur de la branche ; et
- la détermination de ladite valeur de conséquence de système comme une somme desdites valeurs de conséquence de branche.

**4.** Procédé selon la revendication 1, dans lequel ladite étape (S1) de prédiction de représentations de niveaux de charge de chute vide-ordures futurs comprend l'étape de prédiction, pour chacune d'une pluralité de chutes vide-ordures dans ladite pluralité de branches, d'une représentation d'un niveau de charge futur pour la chute vide-ordures à un instant prévu pour le vidage suivant de la chute vide-ordures en considérant un parcours de prédiction comprenant au moins un saut.

**5.** Procédé selon la revendication 1, dans lequel ladite étape (S1) de prédiction de représentations de niveaux de charge de chute vide-ordures futurs comprend l'étape de prédiction, pour chaque chute vide-ordures considérée, d'une représentation de niveau de charge de chute vide-ordures futur sur la base d'estimations consécutives du niveau de charge dans la chute vide-ordures.

**6.** Procédé selon la revendication 1, dans lequel un ordre de sélection de branche prédéterminée est interrompu si la valeur de conséquence de système pour un saut à la branche à son tour suivant l'ordre prédéterminé est moins favorable, à un degré donné, que la valeur de conséquence de système pour une autre candidate au saut suivant.

**7.** Procédé selon la revendication 1, dans lequel ladite étape (S2) de détermination, pour chacune d'une pluralité de candidates de saut suivant possibles, d'une valeur de conséquence de système $B_{systèm}$ est effectuée selon l'algorithme suivant :

$$B_l = \sum_k (R_{lk} + J)^P \cdot K_{lk} \quad pour\ l \in S$$

$$B_{système} = \sum_{l \in S} B_l$$

où $B_1$ est une valeur de conséquence de branche pour la branche 1, $R_{lk}$ est le niveau de charge prédit pour la chute vide-ordures k dans la branche 1, J est une variable optionnelle en rapport à la branche qui peut être fixée à zéro, P est un facteur de puissance pour commander l'impact du niveau de charge prédit sur la valeur de conséquence de branche, $K_{lk}$ est un coefficient de priorité pour la chute vide-ordures k dans la branche 1 et S est la pluralité considérée de branches.

**8.** Procédé selon la revendication 7, dans lequel le niveau de charge prédit $R_{lk}$ est déterminé de la manière suivante :

$$R_{lk} = \frac{F_{lk} + \frac{dF_{lk}}{dt} \cdot T_{pred}}{C_{lk}}$$

où $F_{lk}$ est une estimation du niveau de charge actuel, $\frac{dF_{lk}}{dt}$ est une estimation du taux de croissance du niveau de charge, $T_{pred}$ est un temps de prédiction fixé individuellement et $C_{lk}$ est la capacité de stockage de la chute vide-ordures.

**9.** Procédé selon la revendication 1, dans lequel la branche candidate au saut suivant considérée est exclue de ladite pluralité de branches.

**10.** Système de commande (10) pour commander le fonctionnement d'un système de collecte de déchets par le vide (1) ayant un système de conduits de transport à branches multiples (5) avec une pluralité de chutes vide-ordures (3) connectées à celui-ci, ledit système de commande étant fonctionnel pour sélectionner un saut à une branche suivante pour le vidage de déchets, **caractérisé en ce que** ledit système de commande (10) est adapté pour exécuter le procédé selon l'une quelconque des revendications 1 à 9 et comprend :

- des moyens pour déterminer, pour chacun d'une pluralité de candidates au saut suivant possibles, une valeur de conséquence de système sur la base des représentations prédites de niveaux de charge de chute vide-ordures futurs dans une pluralité de branches, lesdites prédictions couvrant au moins un saut en avant dans le temps ; et
- des moyens pour sélectionner un saut à une branche suivante parmi les candidats qui ont les valeurs de conséquence de système les plus favorables.

**11.** Système de commande selon la revendication 10, dans lequel lesdits moyens pour déterminer une valeur de conséquence de système comprennent en outre :

- des moyens pour effectuer une pondération desdites représentations prédites de niveaux de charge de chute vide-ordures futurs au moyen de coefficients de priorité respectifs ; et
- des moyens pour déterminer ladite valeur de conséquence de système sur la base desdites représentations prédites pondérées de niveaux de charge futurs.

**12.** Système de commande selon la revendication 10, dans lequel lesdits moyens pour déterminer une valeur de conséquence de système comprennent en outre :

- des moyens pour déterminer, pour chaque branche de ladite pluralité de branches, une valeur de conséquence de branche sur la base de représentations prédites de niveaux de charge futurs de chutes vide-ordures à l'intérieur de la branche ; et
- des moyens pour déterminer ladite valeur de conséquence de système comme une somme desdites valeurs de conséquence de branche.

**13.** Système de commande selon la revendication 10, dans lequel lesdits moyens pour déterminer une valeur de conséquence de système comprennent en outre :

- des moyens pour prédire, pour chacune d'une pluralité de chutes vide-ordures dans ladite pluralité de branches, une représentation d'un niveau de charge futur pour la chute vide-ordures à un instant prévu pour le vidage suivant de la chute vide-ordures en considérant un parcours de prédiction comprenant au moins un saut ; et
- des moyens pour déterminer ladite valeur de conséquence de système sur la base desdites représentations prédites de niveaux de charge de chute vide-ordures futurs.

**14.** Système de commande selon la revendication 13, dans lequel lesdits moyens pour prédire une représentation d'un niveau de charge de chute vide-ordures future sont fonctionnels pour effectuer la prédiction sur la base d'estimations consécutives du niveau de charge dans la chute vide-ordures.

**15.** Système de commande selon la revendication 10, dans lequel ledit système de commande est fonctionnel pour interrompre un ordre de sélection de branche prédéterminée si la valeur de conséquence de système pour un saut à la branche à son tour suivant l'ordre prédéterminé est moins favorable, à un degré donné, que la valeur de conséquence de système pour une autre candidate au saut suivant.

**16.** Système de commande selon la revendication 10, dans lequel lesdits moyens pour déterminer, pour chacune d'une pluralité de candidates de saut suivant possibles, une valeur de conséquence de système $B_{système}$ fonctionnent selon l'algorithme suivant :

$$B_l = \sum_k (R_{lk} + J)^P \cdot K_{lk} \quad pour\ l \in S$$

$$B_{système} = \sum_{l \in S} B_l$$

où $B_l$ est une valeur de conséquence de branche pour la branche 1, $R_{lk}$ est le niveau de charge prédit pour la chute vide-ordures k dans la branche 1, J est une variable optionnelle en rapport à la branche qui peut être fixée à zéro, P est un facteur de puissance pour commander l'impact du niveau de charge prédit sur la valeur de conséquence de branche, $K_{lk}$ est un coefficient de priorité pour la chute vide-ordures k dans la branche 1 et S est la pluralité considérée de branches.

**17.** Système de commande selon la revendication 16, dans lequel ledit système de commande est fonctionnel pour déterminer le niveau de charge prédit $R_{lk}$ de la manière suivante :

$$R_{lk} = \frac{F_{lk} + \frac{dF_{lk}}{dt} \cdot T_{pred}}{C_{lk}}$$

où $F_{lk}$ est une estimation du niveau de charge actuel, $\frac{dF_{lk}}{dt}$ est une estimation du taux de croissance du niveau de charge, $T_{pred}$ est un temps de prédiction fixé individuellement et $C_{lk}$ est la capacité de stockage de la chute vide-ordures.

**18.** Système de commande selon la revendication 10, dans lequel la branche candidate au saut suivant considérée est exclue de ladite pluralité de branches.

**19.** Système de collecte de déchets par le vide (1) comprenant un système de commande (10) selon l'une quelconque des revendications 10 à 18.

**20.** Produit de programme informatique pour commander, quand il est exécuté sur un ordinateur (11), le fonctionnement d'un système de collecte de déchets à branches multiples (1), dans lequel ledit produit de programme informatique comprend des moyens de programme (16) pour faire effectuer à l'ordinateur une sélection d'un saut à une branche suivante pour le vidage de déchets, selon la procédure suivante :

- pour chacun d'une pluralité de candidates au saut suivant possibles :

a) la prédiction de représentations de niveaux de charge de chute vide-ordures futurs dans une pluralité de branches, lesdites prédictions couvrant au moins un saut en avant dans le temps ; et
b) la détermination d'une valeur de conséquence de système sur la base desdites représentations prédites de niveaux de charge de chute vide-ordures futurs ; et

- la sélection d'un saut à une branche suivante parmi les candidats qui ont les valeurs de conséquence de système les plus favorables.

**21.** Procédé pour le fonctionnement d'un système de collecte de déchets par le vide (1) ayant un système de conduits de transport à branches multiples (5) avec une pluralité de chutes vide-ordures (3) connectées à celui-ci, dans lequel ledit procédé comprend la sélection automatisée d'un saut à une branche suivante pour le vidage de déchets, **caractérisé en ce que** la sélection automatisée est basée sur la procédure suivante :

- pour chacun d'une pluralité de candidates au saut suivant possibles :

a) la prédiction de représentations de niveaux de charge de chute vide-ordures futurs dans la branche candidate au saut suivant, lesdites prédictions couvrant au moins un saut en avant dans le temps ; et
b) la détermination d'une valeur de conséquence de branche sur la base desdites représentations prédites de niveaux de charge de chute vide-ordures futurs ; et

- la sélection d'un saut à une branche suivante parmi les candidates qui ont les valeurs de conséquence de branche les plus élevées.

Fig. 1

FOR NEXT-HOP CANDIDATE $i$:

PREDICT FUTURE REFUSE CHUTE LOAD LEVELS IN A PLURALITY OF BRANCHES — S1

DETERMINE SYSTEM CONSEQUENCE VALUE BASED ON PREDICTIONS — S2

S3

ALL CANDIDATES TRAVERSED ?

NO $i=i+1$

YES

EVALUATE SYSTEM CONSEQUENCE VALUES

S4

SELECT NEXT BRANCH AMONG CANDIDATES HAVING MOST FAVORABLE SYSTEM CONSEQUENCE VALUES

S5

Fig. 2

AV$_j$

AV$_i$

DV$_{l(k-1)}$   DV$_{lk}$

AV$_l$

COLLECTION
STATION

Fig. 3

Fig. 4

EP 1 620 331 B1

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9847788 A
- SE 99004012
- WO 0105683 A

- WO 010568 A
- WO 0105684 A